# EUROPÄISCHE PATENTSCHRIFT

(11) **EP 2 395 335 B1**
(45) Veröffentlichungstag und Bekanntmachung des Hinweises auf die Patenterteilung: **02.03.2016**
(21) Anmeldenummer: 11168144.1
(22) Anmeldetag: 31.05.2011
(51) Int. Cl.: G01L 3/14

(54) **Drehmoment-Aufnehmer mit U-Profil-Steg**
Torque transducer with U-profile bridge
Récepteur de couple doté d'un dos de profilé en U

(30) Priorität: 10.06.2010 DE 202010005613 U
(43) Veröffentlichungstag der Anmeldung: 14.12.2011
(73) Patentinhaber: Eduard Wille GmbH & Co KG, 42349 Wuppertal (DE)
(72) Erfinder: Valov, Petar, 73525 Schwäbisch Gmünd (DE); Mehlau, Hans-Joachim, 42697 Solingen (DE); Schwafertz, Rainer, 42899 Remscheid (DE)
(74) Vertreter: Willems, Volker

(56) Entgegenhaltungen:
- EP-A2- 1 353 159
- DE-A1-102007 005 894
- DE-U1- 20 209 850
- DE-U1-202010 005 613

## Beschreibung

### Technisches Gebiet

Die Erfindung betrifft einen Drehmomentaufnehmer für eine Kalibrieranlage von Drehmomentschlüsseln, enthaltend
(a) einen inneren Körper,
(b) einen äußeren Ringkörper, der den inneren Körper konzentrisch umgibt,
(c) Stege, welche den inneren Körper mit dem äußeren Ringkörper sternförmig verbinden,
(d) Mittel zur Drehmomenteinleitung,
(e) wenigstens ein Messelement an einem Steg zur Erfassung von Verformung wobei
(f) der innere Körper und der äußere Ringkörper unterschiedliche Massen aufweisen,
   und
(g) der Drehmomentaufnehmer einen Innenmehrkant aufweist.

### Stand der Technik

Drehmomentaufnehmer sind Messwertallfnehmer, die über die Formänderung eines Meßkörpers das Drehmoment bestimmen. Die meisten Drehmomentaufnehmer arbeiten mit Dehnungsmessstreifen. Daneben gibt es auch Drehmomentaufnehmer, die nach dem piezoelektrischen, dem magnetoelastischen oder dem optischen Prinzip funktionieren.

Drehmomentaufnehmer werden an drehenden oder festen Wellen zur Bestimmung von übertragenen Drehmomenten, aber auch in Kalibrieranlagen von Drehmomentschlüsseln eingesetzt. Für kurzbauende und sehr steife zu kalibrierende Werkzeuge, wie etwa Drehmomentschlüssel, werden oft sogenannte Drehmoment-Messflansche eingesetzt. Die Drehmoment-Messflansche bestehen bei diesen gattungsgemäßen Drehmomentaufnehmern aus einer Innennabe, die mittels mehrerer Speichen mit einem Außenring verbunden ist. Die Speichen tragen Messwertsensoren, wie z.B. Delmungsmessstreifen, welche die Biegebelastung bei einem aufgebrachten Drehmoment messen. Bei derartigen Drehmomentaufnehmern sollen der Einfluss von Querkraften und Quermomente weitgehend kompensiert werden. Außerdem soll sich der Drehmomentaufnehmer durch ein geringes Masseträgheitsmoment und eine hohe Messempfindlichkeit auszeichnen.

Bei einem Drehmomentaufnehmer gemäß der deutschen Patentschrift DE 42 08 522 C2 werden nicht Biegekräfte, sondern Scherkräfte gemessen. Dabei weist der Drehmomentaufnehmer einen inneren Körper bzw. innenliegende Innennabe und einen konzentrischen äußeren Ringkörper auf. Der innere Körper ist mit dem äußeren Ringkörper Ober sternförmig verlaufende Stege verbunden. Die Messsensoren, z.B. Dehnungsmessstreifen, zur Erfassung von Torsion sitzen auf den Stegen.

Die EP 1 353 159 A2 betrifft einen Drehmomentsensor in Form eines monolithischen scheibenförmigen Aufnahmeteils, bestehend aus einem kreisringförmigen Innenflansch mit ersten Krafteinleitungsstellen, aus einem krelsringförmigen Außenflansch mit zweiten

Krafteinleitungsstellen und aus zwischen den beiden Flanschen ausgebildeten, radial verlaufenden Verbindungsstegen jeweils mit mechanisch geschwächtem Abschnitt, an welchem druck- oder dehnungsempfindliche, elektrische Ausgangssignale generierende Messwertaufnehmer vorgesehen sind, die nach dem Prinzip einer Wheatstone-Brücke jeweils zu Viertel-, Halb- oder Voll-Brücken in der Weise geschaltet sind, dass ein Drehmoment ermittelbar ist.

In der deutschen Offenlegungsschrift DE 195 25 231 A1 wird ein Drehmomentaufnehmer beschrieben, der aus zwei gegenüberliegenden Flanschen besteht, die über Stege miteinander verbunden sind. Dort sind Dehnungsmessstreifen an den verbindenden Stegen vorgesehen. Die Herstellungskosten dieser Variante von Drehmomentaufnehmern sind ebenfalls relativ hoch. Außerdem ist das Dynamikverhalten bei solchen Drehmomentaufnehmern sehr unzureichend. Nachteil des dort beschriebenen Drehmomentaufnehmers ist ferner, dass immer noch bei hohen Drehzahlen eine Verschiebung des Nullpunktes eintritt und die Herstellungskosten solcher Drehmomentaufnehmer extrem hoch sind.

Die DE202 09 850 U1 offenbart einen Drehmomentaufnehmer mit Stegen, der einen inneren Körper und einen äußeren Ringkörper aufweist, der den inneren Körper konzentrisch umgibt. Stege, die unterschiedliche Breiten aufweisen, verbinden sternförmig den inneren Körper mit dem Ringkörper. Messelemente, die sich an den Stegen befinden, erfassen die Torsion der Stege, die bei einem aufgebrachten Drehmoment entsteht.

Nachteil der erwähnten Drehmomentaufnehmer ist, dass die Herstellungskosten der Drehmomentaufnehmer mit deren Genauigkeit korreliert.

### Offenbarung der Erfindung

Aufgabe der Erfindung ist es daher, einen Drehmomentaufnehmer für eine Kalibrieranlage von Drehmomentschlüsseln zu schaffen, der die Nachteile des oben genannten Standes der Technik beseitigt und möglichst kostengünstig und einfach gestaltet ist und trotzdem empfindlich und genau ist.

Erfingdungsgemäß wird die Aufgabe dadurch gelöst, dass bei einem Drehmomentaufnehmer für eine Kalibrieranlage von Drehmomentschlüsseln der eingangs genannten Art
(h) die Stege als U-Profil ausgebildet sind, wobei die U-Profile im Verhältnis von Breite des U-Profils zur Höhe des U-Profils von 1 bis 1,5 ausgebildet sind.

Die Erfindung beruht auf dem Prinzip, die Querkräfte und die Drehmomentkräfte, die dem Drehmomentaufnehmer über der Krafteinleitung anliegen, optimal auf die Stege mit den Messelementen zur Erfassung von Verformung zu verteilen. Entscheidend ist dabei, dass das U-Profil einen sehr hohen Widerstand gegen Querkräfte aufweist, so dass die Stege eine lokale Stabilität erreichen und die Einflüsse der Querkräfte während der Messung entscheidend minimiert. Durch diese Maßnahme kann die Anzahl der Stege reduziert werden, weil jeder Steg für sich erheblich stabiler ausgebildet ist.

In den Ausgestaltung der Erfindung sind die U-Profile im Verhältnis von Breite des U-Profils zur Höhe des U-Profils von 1 bis 1,5 ausgebildet. Durch dieses Verhältnis ergibt sich eine hohe Biegesteifigkeit mit geringen Auswirkungen der Querkräfte auf die Messelemente.

Besonders vorteilhaft ist, wenn die U-Profile im Verhältnis von Radius Drehmomentaufnehmer zu Radius Stegmitte von 1,5 bis 2,5 von der Mitte des Drehmomentaufnehmers angeordnet sind. Dadurch werden Drehmomentspitzen vermieden und die eingeleitete Kraft homogen verteilt.

In einer vorteilhaften Ausbildung der Erfindung weisen die U-Profile in ihrer Höhe und/oder Breite unterschiedliche Stärken auf. Dies ermöglichst eine weitere Variabilität bezüglich der Statik der Stege und deren Gewichtsverteilung, wodurch ein verbessertes Messergebnisses des Drehmomentaufnehmers erreicht wird.

In einer vorteilhaften Ausbildung der Erfindung sind die Messelemente jeweils an den U-Profilen angeordnet. Durch diese Maßnahme kann die Torsion bzw. Verformung besonders gut gemessen werden, wenn das Drehmoment an dem Drehmomentaufnehmer anliegt.

In den Ausbildung der Erfindung weist der Drehmomentaufnehmer einen Innenmehrkant auf. Der Innenmehrkant nimmt bei der Messung einen Außenmehrkant eines Drehmomentschlüssels formschlüssig auf.

Der Innenmehrkant weist dabei eine Freimachung auf seinen Flächen auf, die beispielsweise eine federnde Kugel eines Außenmehrkants eines Drehmomentschlüssels aufnimmt. Dabei bewirkt die Freimachung eine freie Zentrierung des Außenmehrkants im Innenmehrkant, wodurch Messfehler, welche auf Zentrierungsfehler zurückzuführen sind, erheblich verringert werden. Querkräfte werden dadurch nämlich weitgehend eliminiert.

Zur Verbesserung des dynamischen Verhaltens sind die Massen des inneren Körpers gegenüber dem äußeren Körper unterschiedlich ausgebildet. Dies wird beispielsweise erreicht, wenn der innere Körper und der äußere Ringkörper unterschiedliche Volumen oder unterschiedliche Dichte aufweisen. Aufgrund der unterschiedlichen Trägheiten, die durch die unterschiedlichen Dichten vorhanden sind, erhält man zusätzliche einstellbare Parameter für die Verbesserung der Messgenauigkeit der Drehmomentaufnehmer. In einer geeigneten Ausbildung weist der äußere Ringkörper eine größere Masse auf, als der innere Körper. Besonders vorteilhaft ist, wenn der innere Körper und der äußere Ringkörper unterschiedliche Dichten aufweisen, insbesondere, wenn der äußere Ringkörper eine größere Dichte aufweist als der innere Körper. Dadurch erhält der Drehmomentaufnehmer im inneren Körper ein anderes Trägheitsmoment als im äußeren Ringkörper, was zu einer Verbesserung des dynamischen Verhaltens des Drehmomentaufnehmers führt.

Es erweist sich als besonders vorteilhaft, wenn der Drehmomentaufnehmer mit zwei bis vier U-Profilen ausgebildet ist. Über die Anzahl der Stege kann auf das Verhältnis von Formsteifigkeit und elastischer Verformung Einfluss genommen werden und den Drehmomentaufnehmer sehr gut an die verschiedenen Anwendungsfälle angepasst werden. Normalerweise erhöhen sich die Einflüsse der Querkräfte bei der Reduzierung der Anzahl der Stege.

Kompensiert wird die Einwirkung der Querkräfte durch die U-Profile, die einen besonders hohen Widerstand gegen solche Kräfte aufweisen, so dass die Anzahl der Stege unter Beibehaltung der Genauigkeit beim Messvorgang reduziert werden können. Außerdem ist durch die Reduzierung der Stege auf zwei U-Profile eine kostengünstigere Fertigung des Drehmomentaufnehmers zu erreichen.

Ein Aspekt der vorliegenden Erfindung ist, dass nunmehr das Messelement als Dehnungsmessstreifen ausgebildet ist. Durch den Dehnungsmessstreifen lässt sich die Verformung besonders einfach erfassen.

Weitere Vorteile ergeben sich aus dem Gegenstand der Unteransprüche sowie aus der Beschreibung mit der zugehörigen Zeichnung.

### Kurze Beschreibung der Zeichnung

- Fig. 1: zeigt in einer Prinzipskizze die Vorderansicht eines erfindungsgemäßen Drehmomentaufnehmers.
- Fig. 2: zeigt in einer Prinzipskizze einen Querschnitt durch den Drehmomentaufhehmer.
- Fig. 3: zeigt in einer Prinzipskizze als dreidimensionale Ansicht eine vorderseitige Ansicht des Drehmomentaufnehmers.
- Fig. 4: zeigt in einer Prinzipskizze als dreidimensionale Ansicht eine rückseitige Ansicht des Drehmomentaufnehmers.
- Fig. 5: zeigt in einer Prinzipskizze einen Querschnitt eines U-Profils.

### Bevorzugtes Ausführungsbeispiel

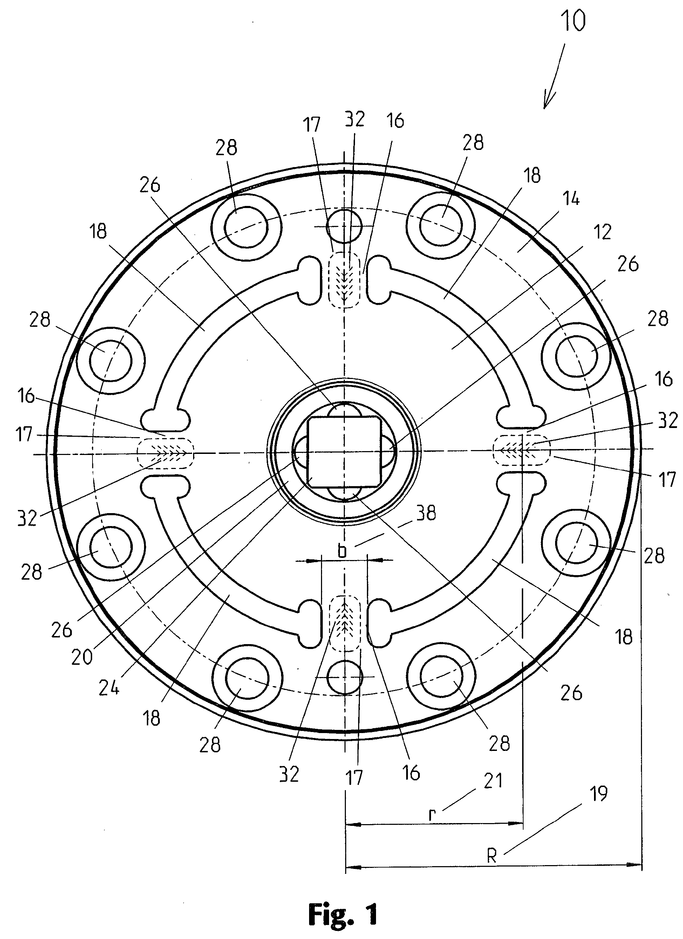

Fig. 1 zeigt in einer Vorderansicht einen erfindungsgemäßen Drehmomentaufnehmer 10. Der Drehmomentaufnehmer 10 enthält einen inneren Körper 12, der von einem äußeren Ringkörper 14 umgeben ist. Der innere Körper 12 ist über radial verlaufende Stege 16 mit dem äußeren Ringkörper 14 verbunden. Die Stege 16 sind U-förmig als U-Profile 17 ausgebildet. Die Stege 16 verbinden den inneren Körper 12 mit dem äußeren Ringkörper 14, wobei der Zwischenraum 18 in diesem Ausführungsbeispiel die Form eines Kreisringstückes mit abgerundeten Endbereichen aufweist.

Im Zentrum des inneren Körpers 12 des Drehmomentaufnehmers 10 ist ein Zapfen 20 zu erkennen, der eine Senkung 22 sowie eine Ausnehmung 24 vorsieht. In diesem Ausführungsbeispiel ist die Ausnehmung 24 als Innenvierkant ausgebildet. Weiterhin befindet sich an den Flächen des Innenvierkants eine Freimachung 26 in Form einer halbkreisförmigen Ausfräsung zur Aufnahme z.B. einer federnden Kugel oder Stift des Außenvierkants eines Drehmomentschlüssels. Der Drehmomentschlüssel weist auf seinem Außenvierkant i.d.R. eine federnde Kugel oder auch Stift auf, die bei der Aufnahme eines Werkzeugs nach innen verschoben wird und beim Einrasten gegen den Innenvierkant eines Einsatzes gedrückt wird. Dadurch kommt es zu einer Verbindung von Drehmomentschlüssel und Einsatz bzw. Drehmomentaufnehmer und gewährleistet eine optimale Krafteinleitung beim Messvorgang.

Weitere Durchgangsbohrungen 28 im äußeren Ringkörper 14 dienen der Statik und der Gewichtsreduzierung oder sind mit entsprechenden Wellenflanschen, zwecks Drehmomentübertragung verschraubbar.

An den U-Profilen 17 sind Messelemente 32 zur Erfassung der Verformung der Stege 16 vorgesehen. Vorzugsweise handelt es sich bei diesen Messelementen 32 um Dehnungsmessstreifen, die ein der Verformung entsprechendes elektrisches Signal an eine nicht dargestellte Auswerteinrichtung liefern. Durch geeignetes Anlegen eines Drehmoments an den Drehmomentaufnehmer 10 werden die Kräfte auf die Stege 16 optimal verteilt. Dabei eliminiert das U-Profil 17 die Querkräfte die durch Einspannen und Verkanten des Drehmomentschlüssels, die bei der Drehmomenteinleitung entstehen können, da diese Kräfte direkt am Messelement durch die Schenkel des U-Profils 17 kompensiert werden.

Bevorzugterweise wird an jedes U-Profil 17 ein Dehnungsmessstreifen mit zwei Messgittern angebracht, wobei der Gitterwinkel 45° zur Steglängsachse beträgt. (Die Dehnungsmessstreifen sind schematisch dargestellt.) Ein besonders hohes Ausgangssignal erhält man, wenn die Messelemente zu einer Wheatstoneschen Messbrücke verschaltet werden. Unterliegt der Drehmomentaufnehmer 10 einem aufgebrachten Drehmoment, lässt sich durch die Anordnung der Dehnungsmessstreifen eine Scherbelastung in Umfangsrichtung mit hoher Empfindlichkeit ermitteln.

Der innere Körper 12 hat eine geringere Masse als der äußere Ringkörper 14. Dies wird beispielsweise durch Materialien unterschiedlicher Dichte erzeugt.

Die Figur zeigt außerdem die unterschiedlichen Verhältnisse *R*/*r* von Radius 19 Drehmomentaufnehmer zu Radius 21 Stegmitte. Zur zusätzlichen Stabilitätsoptimierung des Drehmomentaufnehmers beträgt das Verhältnis 1,5 bis 2,5.

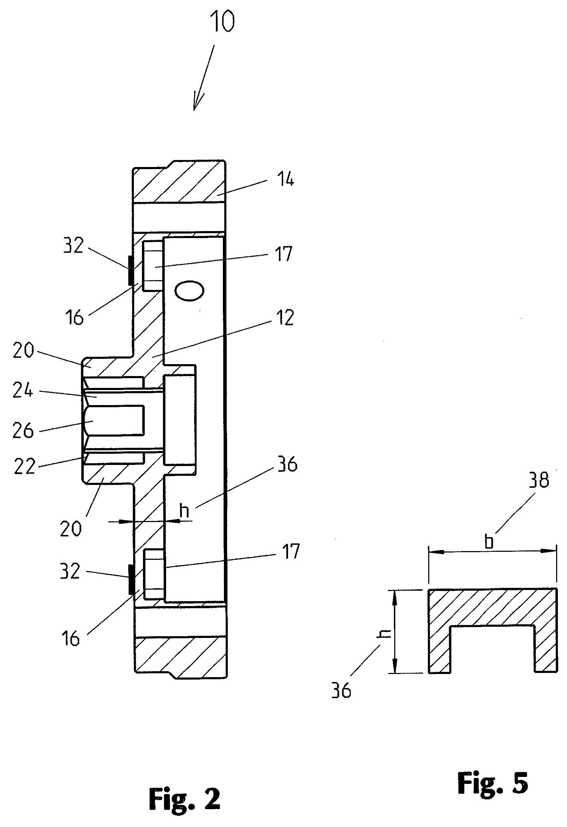

Fig. 2 zeigt in einer Prinzipskizze einen Querschnitt durch den Drehmomentaufnehmer 10. Die Schnittebene ist im Bereich der Stege 16 geführt. Gleiche Bestandteile die in Fig. 1 dargestellt werden, sind auch hier mit gleichen Bezugszeichen versehen. Die Zeichnung zeigt den relativ einfachen Aufbau des Drehmomentaufnehmers10, der aus dem äußeren Ringkörper 14 und dem inneren Körper 12 besteht. Die Messelemente 32 befinden sich auf den U-Profilen 17 der Stege 16. Dadurch ist eine kostengünstige Fertigung des Drehmomentaufnehmers 10 gegeben, da aufwendige Fräsungen oder Bohrungen nicht vorhanden sind. Weiterhin sind der Zapfen 20, die Senkung 22, die Ausnehmung 24, sowie die Ausfräsung 26 zur Aufnahme der federnden Kugel des Drehmomentschlüssels zu erkennen. Die Höhe 36 und die Breite 38 (Fig. 5) der U-Profile sind in der Zeichnung dargestellt.

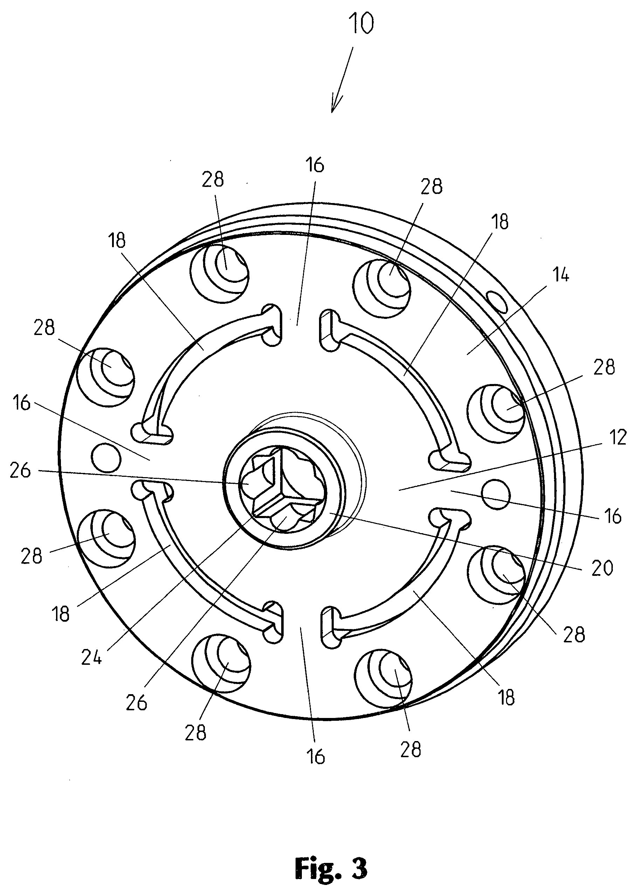

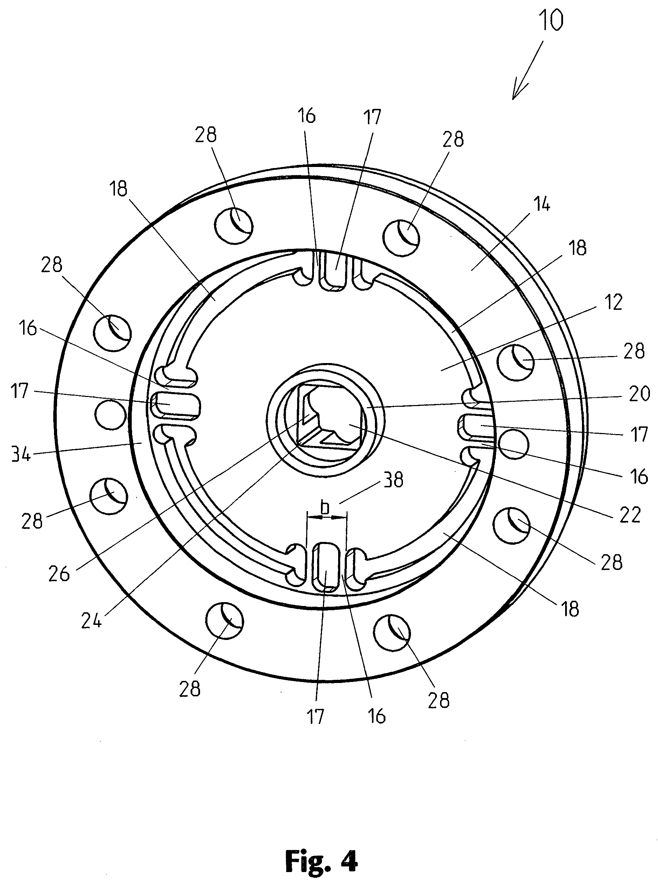

Aus der perspektivischen Darstellung des Drehmomentaufnehmers 10 in Fig. 3 (Vorderansicht) und Fig. 4 (Rückansicht) sind weitere Einzelheiten ersichtlich. Besonders gut sind die Konturen der U-Profile 17 auf der Rückseite (Fig. 4) des Drehmomentaufnehmers 10 zu erkennen. Die Messelemente 32 sind dagegen auf der Vorderseite des Drehmomentaufnehmers 10 angeordnet.

Ein axial angeordneter massiver Ring 34 (siehe Fig. 4) ist auf dem äußeren Ringkörper 14 angeordnet. Der innere Ring 12 ist im Vergleich zum äußeren Ringkörper 14 breiter ausgebildet. Dadurch reduzieren sich die Setzeinflüsse der Verdreheinrichtung, da die Klemmfläche zum Flansch im Vergleich zu herkömmlichen Drehmomentaufnehmeren 10 vergrößert ist. Der Durchmesser eines Messaufnehmers ist beispielsweise 150 mm und der Bund um den eingeräumten Vierkant ist ca.75 mm. Damit wird sichergestellt, dass einzelne Drehmomentspitzen bei der Krafteinleitung ausgefiltert werden und somit eine höhere Homogenität der Kraftverteilung gewährleistet ist.

Weiterhin zeigt die dreidimensionale Ansicht, dass die Zwischenräume 18, welche die Form eines Kreisringstückes mit abgerundeten Endbereichen ausweisen, durchgängig sind. Dadurch ist insbesondere eine Gewichtsreduzierung des inneren Körpers 12 möglich.

Fig. 5 zeigt einen Querschnitt durch das U-Profil 17. Das U-Profil 17 weist in seiner Höhe 36 und/oder Breite 38 unterschiedliche Stärken auf. Damit ist eine besondere Stabilität, Biegefestigkeit und Scherfestigkeit der Stege 16 gewährleistet, da die Breite der U-Profile 17, d.h. die Erstreckung in Umfangsrichtung und die Höhe, also die Erstreckung in axialer Richtung im Verhältnis b/h von 1 bis 1,5 vorliegt. Dies bedingt eine weitere Variabilität bezüglich der Statik bzw. Gewichtsverteilung im Drehmomentaufnehmer.

**Bezugszeichenliste**

| | |
|---|---|
| 10 | Drehmomentaufnehmer |
| 12 | Innerer Körper |
| 14 | Äußerer Ringkörper |
| 16 | Stege |
| 17 | U-Profile |
| 18 | Zwischenraum |
| 19 | Radius Drehmomentaufnehmer (R) |
| 20 | Zapfen |
| 21 | Radius Stegmitte (r) |
| 22 | Senkung |
| 24 | Ausnehmung |
| 26 | Freimachung |
| 28 | Durchgangsbohrung |
| 32 | Messelement |
| 34 | Ring |
| 36 | Höhe des U-Profils (h) |
| 38 | Breite des U-Profils (b) |

## Patentansprüche

1. Drehmomentaufnehmer (10) für eine Kalibrieranlage von Drehmomentschlüsseln, enthaltend
(a) einen inneren Körper (12),
(b) einen äußeren Ringkörper (14), der den inneren Körper (12) konzentrisch umgibt,
(c) Stege (16), welche den inneren Körper (12) mit dem äußeren Ringkörper (14) sternförmig verbinden,
(d) Mittel zur Drehmomenteinleitung,
(e) wenigstens ein Messelement (32) an einem Steg (16) zur Erfassung von Vorformung,
wobei
(f) der innere Körper (12) und der äußere Ringkörper (14) unterschiedliche Massen aufweisen
und
(g) der Drehmomentaufnehmer (10) einen Innenmehrkant aufweist,
**dadurch gekennzeichnet, dass**
(h) die Stege (16) als U-Profil (17) ausgebildet sind, wobei die U-Profle (17) im Verhältnis von Breite (38) des U-Profils (17) zur Höhe (36) des U-Profils (17) von 1 bis 1,5 ausgebildet sind.

2. Drehmomentaufnehmer (10) für eine Kalibrieranlage von Drehmomentschlüsseln nach Anspruch **1, dadurch gekennzeichnet, dass** die U-Profile (17) im Verhältnis von Radius (19) Drehmomentaufnehmer (10) zu Radius (21) Stegmitte von 1,5 bis 2,5 von der Mitte des Drehmomentaufnehmers (10) angeordnet sind.

3. Drehmomentaufnehmer (10) für eine Kalibrieranlage von Drehmomentschlüsseln nach einem der Ansprüche 1 bis **2, dadurch gekennzeichnet, dass** die U-Profile (17) in ihrer Höhe (36) und/oder Breite (38) unterschiedliche Stärken aufweisen.

4. Drehmomentaufnehmer (10) für eine Kalibrieranlage von Drehmotrentschlüsseln nach einem der Ansprüche 1 bis 3, **dadurch gekennzeichnet, dass** die Messelemente (32) jeweils an den U-Profilen (17) angeordnet sind.

5. Drehmomentaufnehmer (10) für eine Kalibrieranlage von Drehmomentschlüsseln nach Anspruch 4, **dadurch gekennzeichnet, dass** der Innenmehrkant in einer Fläche eine Freimachung (26) aufweist.

6. Drehmomentaufnehmer (10) für eine Kalibrieranlage von Drehmomentschlüsseln nach einem der Ansprüche 1 bis 5, **dadurch gekennzeichnet, dass** der äußere Ringkörper (14) eine größere Masse aufweist als der innere Körper (12).

7. Drehmomentaufnehmer (10) für eine Kalibrieranlage von Drehmomentschlüsseln nach einem der Ansprüche 1 bis 6, **dadurch gekennzeichnet, dass** der Drehmomentaufnehmer (10) zwei Stege (16) aufweist.

8. Drehmomentaufnehmer (10) für eine Kalibrieranlage von Drehmomentschlüsseln nach einem der Ansprüche 1 bis 7, **dadurch gekennzeichnet, dass** das Messelement (32) als Dehnungsmessstreifen ausgebildet ist.

9. Drehmomentaufnehmer (10) für eine Kalibrieranlage von Drehmomentschlüsseln nach einem der Ansprüche 1 bis 8, **dadurch gekennzeichnet, dass** der innere Körper (12) und der äußere Ringkörper (14) unterschiedliche Dichten aufweisen.

10. Drehmomentaufnehmer (10) für eine Kalibrieranlage von Drehmomentschlüsseln nach einem der Ansprüche 1 bis 9, **dadurch gekennzeichnet, dass** der äußere Ringkörper (14) eine größere Dichte aufweist als der innere Körper (12).

## Claims

1. A torque transducer (10) comprising
(a) an inner body (12),
(b) an outer annular body (14) surrounding the inner body (12) concentrically,
(c) webs (16) connecting the inner body (12) with the outer annular body (14) in a star shape,
(d) means for introducing torque,
(e) at least one measuring element (32) on a web (16) for detecting deformation, in which
(f) the inner body (12) and the outer annular body (14) have different masses, and
(g) the torque transducer (10) comprises a polygon socket.
**characterized in that**
(h) the webs (16) have the form of a u-profile (17), where the u-profiles (17) have the ratio of width (38) of the u-profile (17) to height (36) of the u-profile (17) from 1 to 1.5.

2. A torque transducer (10) according to claim 1, **characterized in that** the u-profiles (17) are arranged in the ratio of torque transducer (10) radius (19) to web center radius (21) of 1.5 to 2.5 relative to the center of the torque transducer (10).

3. A torque transducer (10) according to one of claims 1 to 2, **characterized in that** the u-profiles (17) have different thicknesses in height (36) and/or width (38).

4. A torque transducer (10) according to one of claims 1 to 3, **characterized in that** the measuring elements (32) are respectively arranged at the u-profiles (17).

5. A torque transducer (10) according to claim 4, **characterized in that** the polygon socket comprises a cut-out (26) in a surface.

6. A torque transducer (10) according to one of claims 1 to 5, **characterized in that** the outer annular body (14) has a greater mass than the inner body (12).

7. A torque transducer (10) according to one of claims 1 to 6, **characterized in that** torque transducer (10) has two webs (16).

8. A torque transducer (10) according to one of claims 1 to 7, **characterized in that** the measuring element (32) is a strain gauge.

9. A torque transducer (10) according to one of claims 1 to 8, **characterized in that** the inner body (12) and the outer annular body (14) have different densities.

10. A torque transducer (10) according to one of claims 1 to 9, **characterized in that** the outer annular body (14) has a greater density than the inner body (12).

## Revendications

1. Capteur de couples de rotation (10) pour un dispositif de calibrage de clés dynamométriques, comprenant :
(a) un corps intérieur (12),
(b) un corps annulaire extérieur (14) qui entoure le corps intérieur (12) de manière concentrique,
(c) des dos (16) qui relient, en forme d'étoile, le corps intérieur (12) au corps annulaire extérieur (14),
(d) des moyens destinés à amorcer le couple de rotation,
(e) au moins un élément de mesure (32) situé sur un dos (16) et destiné à capter la déformation,
(f) le corps intérieur (12) et le corps annulaire extérieur (14) présentant une masse différente et,
(g) le capteur de couples de rotation (10) présentant un trou intérieur polygonal,
**caractérisé en ce que**
(h) les dos (16) sont configurés sous forme de profilés en U (17), les profilés en U (17) étant configurés entre 1 et 1,5 par rapport à la largeur (38) du profilé en U (17) et de la hauteur (36) du profilé en U (17).

2. Capteur de couples de rotation (10) pour un dispositif de calibrage de clés dynamométriques selon la revendication 1, **caractérisé en ce que** les profilés en U (17) sont configurés de 1,5 à 2,5 du centre du capteur de couples de rotation (10) par rapport au rayon (19) du capteur de couples de rotation (10) et au rayon (21) du centre du dos.

3. Capteur de couples de rotation (10) pour un dispositif de calibrage de clés dynamométriques selon l'une quelconque des revendications 1 à 2, **caractérisé en ce que** les profilés en U (17) présentent en hauteur (36) et/ou en largeur (38) des épaisseurs différentes.

4. Capteur de couples de rotation (10) pour un dispositif de calibrage de clés dynamométriques selon l'une quelconque des revendications 1 à 3, **caractérisé en ce que** les éléments de mesure (32) sont disposés à chaque fois sur les profilés en U (17).

5. Capteur de couples de rotation (10) pour un dispositif de calibrage de clés dynamométriques selon la revendication 4, **caractérisé en ce que** le trou intérieur polygonal présente sur une surface un dégagement (26).

6. Capteur de couples de rotation (10) pour un dispositif de calibrage de clés dynamométriques selon l'une quelconque des revendications 1 à 5, **caractérisé en ce que** le corps annulaire extérieur (14) présente une masse supérieure à celle du corps intérieur (12).

7. Capteur de couples de rotation (10) pour un dispositif de calibrage de clés dynamométriques selon l'une quelconque des revendications 1 à 6, **caractérisé en ce que** le capteur de couples de rotation (10) présente deux dos (16).

8. Capteur de couples de rotation (10) pour un dispositif de calibrage de clés dynamométriques selon l'une quelconque des revendications 1 à 7, **caractérisé en ce que** l'élément de mesure (32) est configuré sous forme de jauge de déformation.

9. Capteur de couples de rotation (10) pour un dispositif de calibrage de clés dynamométriques selon l'une quelconque des revendications 1 à 8, **caractérisé en ce que** le corps intérieur (12) et le corps annulaire extérieur (14) présentent des densités différentes.

10. Capteur de couples de rotation (10) pour un dispositif de calibrage de clés dynamométriques selon l'une quelconque des revendications 1 à 9, **caractérisé en ce que** le corps annulaire extérieur (14) présente une densité supérieure à celle du corps intérieur (12).
